# EUROPEAN PATENT SPECIFICATION

(11) **EP 4 303 954 B1**
(45) Date of publication and mention of the grant of the patent: **02.12.2026**
(21) Application number: 22878894.9
(22) Date of filing: 05.10.2022
(51) Int. Cl.: H01M 4/131, H01M 4/525, H01M 4/505, H01M 4/36, H01M 10/052, H01M 4/133, H01M 4/48, H01M 4/587, H01M 4/62, H01M 4/134, H01M 4/38, H01M 4/02

(54) **SECONDARY BATTERY COMPRISING LOW EFFICIENCY POSITIVE ELECTRODE**
SEKUNDÄRBATTERIE MIT KATHODE MIT NIEDRIGEM WIRKUNGSGRAD
BATTERIE SECONDAIRE COMPRENANT UNE CATHODE À FAIBLE RENDEMENT

(30) Priority: 05.10.2021 KR 20210131693; 22.10.2021 KR 20210141818; 24.12.2021 KR 20210187480; 24.12.2021 KR 20210187600
(43) Date of publication of application: 10.01.2024
(60) Divisional application: 26205194.9
(73) Proprietor: LG Energy Solution, Ltd., Seoul 07335 (KR)
(72) Inventor: NOH, Jaekyo, Daejeon 34122 (KR); LEE, Kwan Soo, Daejeon 34122 (KR); KOO, Seongmo, Daejeon 34122 (KR); KANNAN, Aravindaraj Govindaraj, Daejeon 34122 (KR); KIM, Dongwook, Daejeon 34122 (KR); KIM, Young Soo, Daejeon 34122 (KR)
(74) Representative: Goddar, Heinz J.
(86) International application number: PCT/KR2022/015010
(87) International publication number: WO 2023/059073

(56) References cited:
- WO-A1-2021/067127
- KR-A- 20160 073 178
- KR-A- 20180 084 727
- KR-A- 20190 046 425
- KR-A- 20190 078 498

## Description

### [TECHNICAL FIELD]

### Cross Citation with Related Application(s)

This application claims the benefit of Korean Patent Application No. 10-2021-0131693 filed on October 5, 2021, Korean Patent Application No. 10-2021-0141818 filed on October 22, 2021, Korean Patent Application Nos. 10-2021-0187600 and 10-2021-0187480 filed on December 24, 2021 and Korean Patent Application No. 10-2022-0127292 filed on October 5, 2022 in the Korean Intellectual Property Office.

The present disclosure relates to a secondary battery including low efficiency positive electrode.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

In recent years, as mobile devices, such as portable computers, portable phones, and cameras, have been increasingly developed, the demand for secondary batteries has also sharply increased as an energy source for the mobile devices. Among such secondary batteries is a lithium secondary battery exhibiting high charge/discharge characteristics and lifespan characteristics and being environmentally friendly, in which much research has been carried out and which is now commercialized and widely used.

Generally, the lithium secondary battery is manufactured by impregnating an electrode assembly comprising a positive electrode, a negative electrode, and a porous separator with a lithium non-aqueous electrolyte.

The basic performance characteristics of such a lithium secondary battery are greatly affected by the negative electrode material. In order to maximize battery performance, several conditions are required, for example, the negative electrode active material must have an electrochemical reaction potential close to that of lithium metal, must have high reversibility of reaction with lithium ions, and must have a high diffusion rate of lithium ions in the active material. However, graphite is widely used as a material that meets these requirements, and considering the excellent adhesive strength of natural graphite and the excellent output characteristics and lifespan characteristics of artificial graphite, a mixture of natural graphite and artificial graphite has been used to improve the performance of various secondary batteries.

However, in recent years, along with the growth of device fields requiring high-capacity batteries such as electric vehicles and hybrid electric vehicles, the level of energy density required for lithium secondary batteries is continuously increasing, whereby attempts have been made to use a negative electrode containing Si, which has a high theoretical capacity, as a negative electrode active material.

Meanwhile, when the negative electrode active material such as SiO containing Si is used, irreversible capacity occurs, and in order to compensate for this, a sacrificial positive electrode material has been added to the positive electrode to manufacture a battery.

When the sacrificial positive electrode material is not used, a lower capacity than that of the existing positive electrode active material is realized, and thus, in order to match the capacity, the positive electrode loading must be increased, which causes a problem of price increase. Further, when the sacrificial positive electrode material is used, there was a problem that the price of the sacrificial positive electrode material is high. When two types of the positive electrode active material and the sacrificial positive electrode material are mixed, uniform mixing is not achieved, which causes problems that the battery characteristics are insufficient, and a larger amount of lithium by-products are generated from the sacrificial positive electrode material, and the generation amount of gas during storage is increased, and as a result, the battery performance is deteriorated.

Therefore, there is an urgent need to develop a secondary battery technology that solves these problems, does not cause deterioration in capacity or lifespan characteristics, and significantly reduces the generation amount of gas during high-temperature storage. Documents KR20190046425A, KR20190046425A, and WO2021/067127A1 are related prior art.

### [DETAILED DESCRIPTION OF THE INVENTION]

### [Technical Problem]

The present invention has been designed to solve the above-mentioned problems and other technical problems that have yet to be resolved.

Specifically, it is an object of the present invention to provide a secondary battery that does not use a separate sacrificial positive electrode material but has capacity and lifespan characteristics of similar levels to the case of including the same, and at the same time, significantly reduces the generation amount of gas during high-temperature storage.

### [Technical Solution]

In order to achieve the above objects, according to the present invention a secondary battery according to claim 1 is provided. Preferred embodiments are defined in the dependent claims.

Meanwhile, the negative electrode active material may be a mixture of a silicon-based active material and a carbon-based active material.

The silicon-based active material may be contained in an amount of 1 to 10% by weight based on the total weight of the negative electrode active material.

The negative electrode has a ratio (initial efficiency) of an initial discharge capacity to an initial charge capacity in a battery using lithium as a counter electrode of 85% to 89%, more specifically 86% to 87%.

The positive electrode mixture layer further comprises a conductive material, and the conductive material is composed of a single-walled carbon nanotube (SWCNT) having an impurity content of 300 ppm to 5000 ppm, and the conductive material may have an impurity content of 3000 ppm to 4000 ppm.

### [BRIEF DESCRIPTION OF THE DRAWINGS]

Fig. 1 is a graph showing the generation of irreversible capacity according to Experimental Example 1;
Fig. 2 is a SEM photograph of the positive electrode active material of Preparation Example 2 according to Experimental Example 2;
Fig. 3 is an SEM photograph of a mixture of MWCNT and a positive electrode active material of Experimental Example 3; and
Fig. 4 is a SEM photograph of a mixture of SWCNT and a positive electrode active materials of Experimental Example 3.

### [DETAILED DESCRIPTION OF THE EMBODIMENTS]

Hereinafter, the present invention will be described in more detail for a better understanding of the present invention.

The term "including" or "comprising" as used herein specifies a specific feature, integer, step, action, component or a combination thereof, but does not exclude the presence or addition of a different specific feature, integer, step, component and/or a combination thereof.

According to the present invention, there is provided a secondary battery according to claim 1.

As described above, in the case of a secondary battery that contains a silicon-based active material in an amount of about 5% by weight or more as a negative electrode active material, the irreversible capacity of the negative electrode generates at about 3 to 4%, and the initial efficiency appears at about 87%. However, in this case, the irreversible capacity is different from the conventional case of using a lithium transition metal oxide as a positive electrode active material, and thus, a separate sacrificial positive electrode material such as Li₂NiO₂ was used to compensate for this and match with the irreversible capacity.

However, when such a sacrificial positive electrode material is used, a lithium by-product is generated in excess of lithium, and a large amount of gas is generated during high-temperature storage, which causes deterioration in battery performance.

In addition, since the sacrificial positive electrode material and the conventional positive electrode active material of the lithium transition metal oxide are mixed, the mixing uniformity is lower than the case where only one type of material is used, which also affects battery performance.

However, according to the present invention, as the positive electrode active material with an initial positive electrode efficiency of 85% to 89% is included, the sacrificial positive electrode material is not included and thus, the mixing uniformity can be improved by using one type of material, and the generation of gas during high-temperature storage can also be reduced.

Specifically, the lithium transition metal oxide as the positive electrode active material of the present invention is doped with a dopant in an amount of 4000 to 5000 ppm based on the total weight of the lithium transition metal oxide, and the dopant is Zr.

If the content of the dopant is too small outside the above range, the initial efficiency cannot be sufficiently lowered, and if the content of the dopant is too large, the dopant acts as a resistance to generate irreversible lithium and deteriorate lifespan characteristics, which is thus not preferable.

More specifically, the content of the dopant may be 4300 to 4700 ppm based on the total weight of the lithium transition metal oxide.

Here, the doping is a different concept from substitution, and it does not replace a part of the transition metal crystal lattice, but is located between the crystal lattices, which stabilizes the positive electrode structure, and increases the electrical conductivity and ionic conductivity during charging and discharging, thus improving the lifespan characteristics.

Therefore, the dopant is not represented in the following chemical formula, and the lithium transition metal oxide may be represented by the following chemical formula 1.

Li₁₊ₓNiₐCo_{b}Mn_{c}M_{1-(a+b+c)}O_{2-y}A_{y} (1)

wherein,
M is at least one selected from the group consisting of Cu, Ti, Mg, Al, and Pt,
A is an oxygen-substitution type halogen, and
0≤x≤0.5, 0.88≤a<1, 0≤b≤0.2, 0≤c≤0.2, 0.9≤a+b+c≤1, and 0≤y≤0.001.

More specifically, the lithium transition metal oxide may be represented by the following chemical formula (2).

Li₁₊ₓNiₐCo_{b}Mn_{c}Al_{1-(a+b+c)}O_{2-y}A_{y} (2)

wherein,
A is an oxygen-substitution type halogen, and
0≤x≤0.5, 0.88≤a<1, 0≤b≤0.15, 0≤c≤0.15, 0.9≤a+b+c≤1, and 0≤y≤0.001.

Here, the a may be specifically 0.90≤a<1.

That is, the dopant is not represented in chemical formula 1 and is separately contained in an amount of 4000 to 5000 ppm based on the total weight of the transition metal oxide.

Further, the lithium transition metal oxide included as a positive electrode active material according to the present invention contains Ni in an amount of 88 mol% or more, specifically 90 mol% or more, more specifically, 92 mol% to 95 mol%, based on the transition metals.

When the above conditions are satisfied, it exhibits the most similar initial efficiency to the negative electrode, and is most preferable in terms of capacity and lifespan characteristics. In other words, it is an active material that can perform the similar function to the case of mixing the sacrificial positive electrode material.

In addition, the lithium transition metal oxide is a single particle.

The single particle means a state in which the primary particles exist individually, or less than 10 primary particles are aggregated.

As described above, the single-particle lithium transition metal oxide causes less particle cracking during rolling after being coated with the positive electrode active material, and thus, can increase the loading, and the resistance of the particles is minimized during lifespan evaluation, resulting in improved lifespan and power output, which are thus more preferred.

The lithium transition metal oxide may be used in a unimodal form within the positive electrode mixture layer, or it may be mixed and used in a bimodal form, but is not limited thereto. According to the present invention the lithium transition metal oxide of claim 1 is used in a bimodal form. Specifically, the lithium transition metal oxide can improve the packing density and reduce the resistance inside the electrode, thus improving the performance, and also it maximizes the contact between the positive electrode active material and the electrolyte, thus improving the performance, so that it can be mixed and used in a bimodal form.

According to the present invention the lithium transition metal oxide is used in a bimodal form with regard to an average diameter (D50), wherein particles having an average diameter (D50) of 10 to 20 µm and particles having an average diameter (D50) of 1 to 7 µm are mixed.

The "average diameter D50" is a particle diameter at the 50% point in the cumulative distribution of particles according to the particle diameter. The D50 can be measured using a laser diffraction method, and specifically, the powder to be measured is dispersed in a dispersion medium, and then introduced into a laser diffraction particle size measurement device (e.g., Microtrac S3500). When the particles passed through a laser beam, a difference in diffraction patterns according to the particle size is measured to calculate a particle size distribution. D50 can be measured by calculating a particle diameter at the 50% point in the cumulative distribution of particles according to the particle diameter in the measurement device.

Meanwhile, the positive electrode including low efficiency positive electrode active material has a ratio (initial efficiency) of an initial discharge capacity to an initial charge capacity in a battery using lithium as a counter electrode of 85% to 89%, specifically 86% to 87%, and more specifically 87%.

The initial efficiency means a ratio of an initial discharge capacity to an initial charge capacity when the positive electrode and lithium metal are used as counter electrodes, a half-coin cell is manufactured using a carbonate-based electrolyte, and charging and discharging proceed at 0.2C at 4.2V to 2.5V.

As described above, in the secondary battery according to the present invention, the positive electrode exhibits lower efficiency than the positive electrode active material conventionally used in the art, it is more preferable in terms of the capacity and lifespan characteristics when using a negative electrode containing a silicon-based active material as in the present invention, and it may have capacity and lifespan characteristics of equivalent levels to the case where the sacrificial positive electrode material is used. Meanwhile, since it does not contain a separate lithium-excess material like conventional sacrificial positive electrode materials, there is also an effect of reducing the generation of gas during high-temperature storage due to the generation of lithium by-products.

The positive electrode active material according to the present disclosure may, in addition to the lithium transition metal oxide, further include a layered compound such as lithium cobalt oxide (LiCoO₂), lithium nickel oxide (LiNiO₂), or a compound substituted with one or more transition metals; lithium manganese oxides such as chemical formulae Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by chemical formula LiNiₓMn₂₋ₓO₄; LiMn₂O₄ in which a part of Li in the chemical formula is substituted with an alkaline earth metal ion; lithium iron phosphate represented by LiFePO₄; disulfide compound; Fe₂(MoO₄)₃, or the like.

At this time, the lithium transition metal oxide may be contained in an amount of 80% by weight to 100% by weight, specifically 100% by weight, based on the total weight of the positive electrode active material.

Meanwhile, a negative electrode suitable for use with such a positive electrode may include a silicon-based active material as a negative electrode active material, and specifically, it may be a mixture of a silicon-based active material and a carbon-based active material, wherein the silicon-based active material may be contained in an amount of 1 to 10% by weight, specifically 5 to 10% by weight, based on the total weight of the negative electrode active material.

If the content of the silicon-based active material is too small outside the above range, a high-energy secondary battery cannot be obtained, and if the content of the silicon-based active material is too large, the irreversible capacity increases, and swelling due to charge/discharge increases, which is not preferable.

Similarly to the positive electrode, the negative electrode having such a structure may also have the ratio (initial efficiency) of the initial discharge capacity to the initial charge capacity in a battery using lithium as a counter electrode of 85% to 89%, and specifically, it may have the ratio (initial efficiency) of the initial discharge capacity to the initial charge capacity in the battery using lithium as a counter electrode of 86% to 87%.

The initial efficiency is also the same as described for the positive electrode. However, in this case, lithium is used as the negative electrode and the counter electrode.

Meanwhile, each of the positive electrode mixture layer and the negative electrode mixture layer may further include a conductive material and a binder.

The conductive material is not particularly limited as long as it has high conductivity without causing a chemical change in the corresponding battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whisker such as zinc oxide and potassium titanate; conductive metal oxides such as titanium oxide; conductive materials such as polyphenylene derivatives, and the like can be used. Specifically, the carbon fiber may be carbon nanotubes.

The carbon nanotubes may be single-walled carbon nanotubes (SWCNT) or multi-walled carbon nanotubes (MWCNT).

However, when multi-walled carbon nanotubes (MWCNT) with a large number of bonds forming the walls are used, there is a problem that their conductivity decreases as the cycle progresses.

Thus, the present inventors have considered using single-walled carbon nanotubes that can simultaneously exhibit both metallic characteristics and semiconducting characteristics, and shows a nano-rod shape and has a small number of carbon nanotubes, but exhibits good electrical conductivity between active materials using relatively long carbon nanotubes. However, single-walled carbon nanotubes had problems including high Fe impurities of about 70000 ppm.

Therefore, the present inventors have considered single-walled carbon nanotubes with reduced impurities and increased purity, and confirmed that when this is used for the positive electrode, it can have sufficient conductivity even when the cycle progresses, and there is no problem of capacity decrease or resistance increase due to impurities.

Therefore, in the present disclosure, most specifically, single-walled carbon nanotubes with reduced impurity content can be used as the conductive material, particularly for the positive electrode.

Specifically, the conductive material may be a single-walled carbon nanotube having an impurity content of 300 ppm to 5000 ppm, more specifically an impurity content of 3000 ppm to 4000 ppm, and most specifically an impurity content of 3000 ppm to 3500 ppm.

If the impurity content is too high outside the above range, the impurities may act as a resistance to degrade the output characteristics, which is not preferable, and if the impurity content is lower than the above range, it is difficult to remove impurities. The content of impurities can be measured using a high-frequency inductively coupled plasma (ICP). Specifically, 1 g of single-walled carbon nanotubes are dissolved in hydrochloric acid (HCl), diluted 100 times with distilled water (DI water), and filtered using a filter made of Teflon (PTFE). The impurity content can be measured with the filtered solution.

In addition, as described above, single-walled carbon nanotubes with reduced impurity content may be obtained by performing a demetallation process.

The demetallation process can be performed by preparing single-walled carbon nanotubes (e.g., OCSiAL, SWCNT), mixing this with a 35% hydrochloric acid (HCl) solution and distilled water (DI water) and then centrifuging the mixture, and mixing the sunken single-walled carbon nanotubes with distilled water (DI water) and repeating the process several times until pH 7 is reached.

The originally produced single-walled carbon nanotube contains 70000 ppm or more of metal impurities, specifically iron impurities, but such a de-metallization process can greatly reduce the impurity content of the single-walled carbon nanotubes, whereby the conductivity of the positive electrode can be improved without problems of resistance or side reactions, and thus, the lifespan characteristics can also be improved.

Meanwhile, the diameter of the single-walled carbon nanotubes may be 0.5 nm to 10 nm, specifically, 0.5 nm to 5 nm.

If the average diameter is too small outside the above range, the dispersed carbon nanotubes are buried between the positive electrode active material particles, making it difficult to form sufficient pores, and if the average diameter is too large, an excellent effect of improving conductivity cannot be obtained, which is thus not preferable.

Further, the length of the single-walled carbon nanotube is not particularly limited, but the length of the single-walled carbon nanotubes may be 5 µm to 200 µm, specifically, 10 µm to 100 µm.

As the length of the single-walled carbon nanotube becomes longer, the conductivity of the positive electrode is improved, and the strength and the electrolyte storage property is also improved, but if the length is too long outside the above range, the dispersibility may deteriorate, and thus, the above range is most appropriate.

Here, the diameter and length can be measured by AFM (atomic force microscopy).

As described above, the aspect ratio (length/diameter) of the single-walled carbon nanotube, which is defined by the ratio of the diameter to the length of the single-walled carbon nanotube, may be 100 to 30,000, and specifically 200 to 20,000.

Meanwhile, the single-walled carbon nanotubes may generally have a shape in which a plurality of such single-walled carbon nanotubes are bundled together, and depending on the shape, it may have a secondary shape aggregated in an entangled type or a bundle type, and specifically, it may have a secondary shape aggregated in a bundle type.

Specifically, unless otherwise stated, the term "bundle type" as used herein refers to the arrangement of a plurality of CNT units in parallel to each other, or a secondary shape such as a spirally wound bundle shape or a rope shape. The term "entangled type" means that a plurality of CNT units entangle with each other without being limited to a specific orientation.

In the chemical vapor deposition method, the above shape can be prepared by varying the temperature in order to produce a carbon nanotube of a desired shape. At this time, since the carbon nanotube with the entangled type structure has a bundled structure and is similar to the intermediate shape of the sphere type conductive material and the carbon nanotube with the bundle-type structure, which is thus disadvantageous for forming a network structure, whereas in the bundle-type structure, carbon atoms are spaced apart from each other by a predetermined distance and exist in strands, which is easier to transport electrons. Therefore, it is more preferable to have a bundle type structure when it is necessary to secure electrical conductivity according to the present disclosure.

The specific surface area of the single-walled carbon nanotubes having such a secondary shape may be 100 to 3,000, specifically 500 to 1,000.

If the specific surface area is too small outside the above range, it is difficult to ensure sufficient conductivity, and if it is too large, the dispersibility may decrease, which is not preferable.

Such a specific surface area represents the BET specific surface area, which is measured by the BET method. Specifically, the specific surface area can be calculated from the nitrogen gas adsorption amount at 77K under liquid nitrogen temperature using BELSORP-mino II (BEL Japan Inc.).

Such a conductive material may be contained in each of the positive electrode mixture layer and the negative electrode mixture layer in an amount of 0.1 to 30% by weight, specifically 0.1 to 10% by weight, more specifically 0.5 to 5% by weight, based on the total weight of each of these layers, and most specifically, when a carbon nanotube with reduced impurities is used, it may be reduced to 0.05 to 0.2% by weight.

If the content is too large outside the above range, the content of the active material is relatively reduced, the capacity is reduced, and if the content is too small, conductivity and output characteristics may be deteriorated, which is not preferable.

Specific examples of the binder include polyvinylidenefluoride (PVDF), a polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylenepropylene-diene monomers (EPDMs), sulfonated EPDMs, styrene-butadiene rubber (SBR), fluorine rubber, and various copolymers thereof.

The binder may be contained in each of the positive electrode mixture layer and the negative electrode mixture layer in an amount of 0.1 to 30% by weight, specifically 0.1 to 10% by weight, more specifically 0.5 to 5% by weight, based on the total weight of each of these layers..

If the content of the binder is too large outside the above range, the content of active material decreases and thus, the capacity decreases. If the content is too small, the adhesive strength may be lowered and the lifespan characteristics may be deteriorated, which is not preferable.

Other components included in the secondary batteries are well known in the art, and thus, a detailed description thereof is omitted herein, and the conventional structure is included within the present disclosure.

Hereinafter, preferred examples of the present disclosure, comparative examples for comparing them, and experimental examples for evaluating them are described. However, it will be obvious to those skilled in the art that these examples are for illustrative purposes only and various changes and modifications can be made without deviating from the scope and spirit of the present description, and it goes without saying that such modifications and modifications fall within the scope of the appended claims.

### <Preparation Example 1>

MWCNT (Multi-walled carbon nanotube, LG CHEM, MWCNT) was prepared. This was filled into a reactor made of a quartz tube, and then heated to 900°C under vacuum. After reaching the target temperature, gaseous chlorine gas (Cl₂) was supplied into the reactor for 15 minutes to perform a chlorination process. Then, the temperature inside the reactor was raised to 1200°C and nitrogen gas was injected to remove metal chlorides in the carbon nanotubes. MWCNT (conductive material 1) having an impurity content of 20 ppm was prepared.

### <Reference Example>

LiNi_{0.03}Co_{0.02}Mn_{0.03}Al_{0.02}O₂ (active materials with an average diameter D50: 12 µm and an average diameter D50: 5 µm were mixed and used in a volume ratio of 8:2) as a positive electrode active material, conductive material 1 (MWCNT) as a conductive material, and PVdF as a binder were mixed at a weight ratio of 98:0.8:1.2 in N-methylpyrrolidone solvent to prepare a composition for forming a positive electrode, which was then applied to an aluminum current collector having a thickness of 15 µm so that the loading amount was 20 mg/cm², thereby manufacturing a positive electrode. At this time, the positive electrode had the ratio (initial efficiency) of the initial discharge capacity to the initial charge capacity in the battery using lithium as the counter electrode of 90%.

A mixture of graphite and SiO in a weight ratio of 95: 5 as a negative electrode active material, a styrene-butadiene rubber (SBR) as a binder, sodium carboxymethylcellulose (CMC) as a thickener and carbon black as a conductive material were mixed at a weight ratio of 97:1:1:1, and then water as a solvent was added thereto to prepare a composition for forming a negative electrode. This was applied to a 10 µm copper current collector so that the loading amount was 10mg/cm², thereby manufacturing a negative electrode. At this time, the negative electrode had the ratio (initial efficiency) of the initial discharge capacity to the initial charge capacity in the battery using lithium as the counter electrode of 87%.

A polyethylene material separator (thickness: 15 um) was interposed between the positive electrodes and the negative electrode manufactured above, and then an electrolyte solution, containing a mixed solvent of ethylene carbonate (EC), ethylmethyl carbonate (EMC), and dimethyl carbonate (DMC) in a volume ratio of 20:10:70, and containing 1M of 1.3M LiPF₆ among the total amount of the electrolyte, was injected to manufacture a secondary battery.

### <Experimental Example 1>

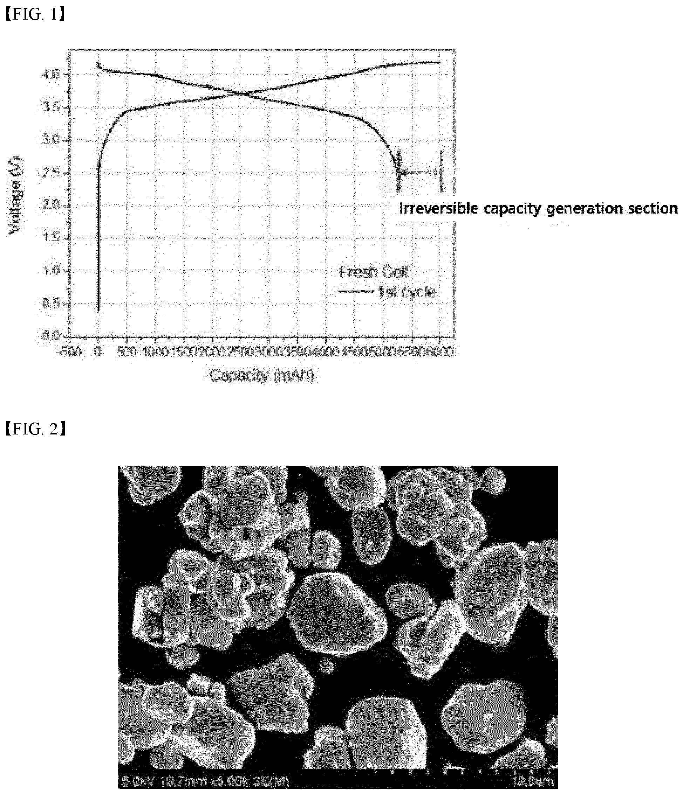

The secondary battery manufactured in Reference Example was subjected to CC/CV charging and CC discharging once at 0.2C in the range of 4.2V~2.5V, and the capacity thereof was measured. The results are shown in Fig. 1 below.

Referring to Fig. 1, it can be confirmed that when SiO was used as the negative electrode active material as in Reference Example, the discharge capacity was decreased due to irreversible capacity unless a sacrificial positive electrode material capable of compensating for this was used for the positive electrode active material.

### <Preparation Example 2>

LiOH and Ni_{0.93}Co_{0.02}Mn_{0.03}Al_{0.02}(OH)₂ precursor were mixed so that the molar ratio of Li: (NiCoMnAl) was 1.05: 1, and then further mixed with 4500ppm of ZrO₂ to prepare a mixed material. The mixed material was put in an alumina crucible, and calcined at 900°C under an oxygen (O₂) atmosphere for 15 hours to prepare a positive electrode active material having an average diameter D50 of 12 µm.

### <Preparation Example 3>

LiOH and Ni_{0.93}Co_{0.02}Mn_{0.03}Al_{0.02}(OH)₂ precursor were mixed so that the molar ratio of Li: (NiCoMnAl) was 1.05: 1, and then further mixed with 4500ppm of ZrO₂ to prepare a mixed material. The mixed material was put in an alumina crucible, and calcined at 700°C under an oxygen (O₂) atmosphere for 15 hours to prepare a positive electrode active material having an average diameter D50 of 5 µm.

### <Experimental Example 2>

An SEM photograph of the positive electrode active material prepared in Preparation Example 2 was taken and shown in Fig. 2 below.

Referring to Fig. 2 , it can be confirmed that the lithium transition metal oxide was produced as single particles.

### <Example 1>

A secondary battery was manufactured in the same manner as in Reference Example, except that the positive electrode active materials prepared in Preparation Example 2 and Preparation Example 3 were mixed and used in a volume ratio of 8:2. At this time, the positive electrode had the ratio (initial efficiency) of the initial discharge capacity to the initial charge capacity in the battery using lithium as a counter electrode of 87%.

### <Example 2>

A secondary battery was manufactured in the same manner as in Reference Example, except that LiNi_{0.93}Co_{0.02}Mn_{0.03}Al_{0.02}O₂ doped with Zr at 4000 ppm based on the total weight were respectively prepared as the positive electrode active materials (by adjusting only the amount of ZrO₂ in Preparation Examples 2 and 3) and then mixed and used (active material with an average diameter D50: 12 µm and active material with an average diameter D50: 5 µm were mixed in a volume ratio of 8:2). At this time, the positive electrode had the ratio (initial efficiency) of the initial discharge capacity to the initial charge capacity in the battery using lithium as a counter electrode of 88%.

### <Example 3>

A secondary battery was manufactured in the same manner as in Reference Example, except that LiNi_{0.93}Co_{0.02}Mn_{0.03}Al_{0.02}O₂ doped with Zr at 5000 ppm based on the total weight were respectively prepared as the positive electrode active materials (by adjusting only the amount of ZrO₂ in Preparation Examples 2 and 3) and then mixed and used (active material with an average diameter D50: 12 µm and active material with an average diameter D50: 5 µm were mixed in a volume ratio of 8:2). At this time, the positive electrode had the ratio (initial efficiency) of the initial discharge capacity to the initial charge capacity in the battery using lithium as a counter electrode of 86%.

### ≺Comparative example 4>

A secondary battery was manufactured in the same manner as in Reference Example, except that LiNi_{0.93}Co_{0.02}Mn_{0.03}Al_{0.02}O₂ doped with Zr at 3000 ppm based on the total weight were respectively prepared as the positive electrode active materials (by adjusting only the amount of ZrO₂ in Preparation Examples 2 and 3) and then mixed and used (active material with an average diameter D50: 12 µm and active material with an average diameter D50: 5 µm were mixed in a volume ratio of 8:2). At this time, the positive electrode had the ratio (initial efficiency) of the initial discharge capacity to the initial charge capacity in the battery using lithium as a counter electrode of 88%.

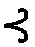 Comparative Example 5>

A secondary battery was manufactured in the same manner as in Reference Example, except that LiNi_{0.93}Co_{0.02}Mn_{0.03}Al_{0.02}O₂ doped with Zr at 6000 ppm based on the total weight were respectively prepared as the positive electrode active materials (by adjusting only the amount of ZrO₂ in Preparation Examples 2 and 3) and then mixed and used (active material with an average diameter D50: 12 µm and active material with an average diameter D50: 5 µm were mixed in a volume ratio of 8:2). At this time, the positive electrode had the ratio (initial efficiency) of the initial discharge capacity to the initial charge capacity in the battery using lithium as a counter electrode of 85%.

### <Example 6>

A secondary battery was manufactured in the same manner as in Reference Example, except that LiNi_{0.88}Co_{0.07}Mn_{0.04}Al_{0.01}O₂ doped with Zr at 1500 ppm based on the total weight were respectively prepared as the positive electrode active materials (by using a precursor with adjusted ratios of Ni, Co, and Mn, and adjusting the amount of ZrO₂ in Preparation Examples 2 and 3) and then mixed and used (active material with an average diameter D50: 12 µm and active material with an average diameter D50: 5 µm were mixed in a volume ratio of 8:2). At this time, the positive electrode had the ratio (initial efficiency) of the initial discharge capacity to the initial charge capacity in the battery using lithium as a counter electrode of 85%.

### <Preparation Example 4>

SWCNT(single-walled carbon nanotube, OCSiAl) was prepared. 5 g of SWCNT was mixed with 200 ml of 35% hydrochloric acid (HCl) solution and 30 ml of distilled water (DI water), and the mixture was centrifuged. The sunken SWCNT was mixed with distilled water (DI water), and the process was repeated several times until pH 7 was reached. Thereby, SWCNT (conductive material 2) having an impurity content of 3200 ppm was prepared.

At this time, the content of impurities was measured by ICP measurement method. Specifically, 1 g of single-walled carbon nanotubes were dissolved in hydrochloric acid (HCl), diluted 100 times in distilled water (DI water), and filtered using a filter made of Teflon (PTFE). The impurity content was measured using the filtered solution.

### <Preparation Example 5>

SWCNT(single-walled carbon nanotube, OCSiAl) was prepared. 5 g of SWCNT was mixed with 200 ml of 35% hydrochloric acid (HCl) solution and 50 ml of distilled water (DI water), and the mixture was centrifuged. The sunken SWCNT was mixed with distilled water (DI water), and the process was repeated several times until pH 7 was reached. Thereby, SWCNT (conductive material 3) having an impurity content of 4000 ppm was prepared.

### <Preparation Example 6>

SWCNT(single-walled carbon nanotube, OCSiAl) was prepared. 5 g of SWCNT was mixed with 200 ml of 35% hydrochloric acid (HCl) solution and 500 ml of distilled water (DI water), and the mixture was centrifuged. The sunken SWCNT was mixed with distilled water (DI water), and the process was repeated several times until pH 7 was reached. Thereby, SWCNT (conductive material 4) having an impurity content of 10000 ppm was prepared.

### <Example 7>

A secondary battery was manufactured in the same manner as in Reference Example, except that the positive electrode active materials prepared in Preparation Examples 2 and 3 were mixed and used at a volume ratio of 8:2, and the conductive material 2 of Preparation Example 4 as the conductive material was used instead of the conductive material 1. At this time, the positive electrode had the ratio (initial efficiency) of the initial discharge capacity to the initial charge capacity in the battery using lithium as a counter electrode of 86%.

### <Example 8>

A secondary battery was manufactured in the same manner as in Reference Example, except that the positive electrode active materials prepared in Preparation Examples 2 and 3 were mixed and used at a volume ratio of 8:2, and the conductive material 3 of Preparation Example 5 as the conductive material was used instead of the conductive material 1. At this time, the positive electrode had the ratio (initial efficiency) of the initial discharge capacity to the initial charge capacity in the battery using lithium as a counter electrode of 85%.

### <Example 9>

A secondary battery was manufactured in the same manner as in Reference Example, except that the positive electrode active materials prepared in Preparation Examples 2 and 3 were mixed and used at a volume ratio of 8:2, and the conductive material 4 of Preparation Example 6 as the conductive material was used instead of the conductive material 1. At this time, the positive electrode had the ratio (initial efficiency) of the initial discharge capacity to the initial charge capacity in the battery using lithium as a counter electrode of 86%.

### <Example 10>

A secondary battery was manufactured in the same manner as in Reference Example, except that the positive electrode active materials prepared in Preparation Examples 2 and 3 were mixed and used at a volume ratio of 8:2, and positive electrode active material: conductive material: binder were mixed at a weight ratio of 97.6:1.2:1.2. At this time, the positive electrode had the ratio (initial efficiency) of the initial discharge capacity to the initial charge capacity in the battery using lithium as a counter electrode of 88%.

### <Comparative Example 1>

A secondary battery was manufactured in the same manner as in Reference Example, except that a mixture in which LiNi_{0.88}Co_{0.07}Mn_{0.04}Al_{0.01}O₂ (active material with an average diameter D50: 10 µm and active material with an average diameter D50: 5 µm were mixed at a volume ratio of 8:2, and not doped with Zr) as a positive electrode active material, and Li₂NiO₂ as a sacrificial positive electrode material were mixed in a weight ratio of 95:5, conductive material 1 (MWCNT) as a conductive material and PVdF as a binder were mixed at a weight ratio of 98:0.8:1.2 in N-methylpyrrolidone solvent to prepare a composition for forming a positive electrode. At this time, the positive electrode had the ratio (initial efficiency) of the initial discharge capacity to the initial charge capacity in the battery using lithium as a counter electrode of 91%.

### <Comparative Example 2>

A secondary battery was manufactured in the same manner as in Reference Example, except that LiNi_{0.93}Co_{0.02}Mn_{0.03}Al_{0.02}O₂ not doped with Zr were respectively mixed and used as the positive electrode active materials (active material with an average diameter D50: 12 µm and active material with an average diameter D50: 5 µm were mixed at a volume ratio of 8:2). At this time, the positive electrode had the ratio (initial efficiency) of the initial discharge capacity to the initial charge capacity in the battery using lithium as a counter electrode of 90%.

### <Comparative Example 3>

A secondary battery was manufactured in the same manner as in Reference Example, except that LiNi_{0.5}Co_{0.2}Mn_{0.3}O₂ doped with Zr at 4500 ppm (only the composition ratio of Ni, Co, and Mn of the precursor was adjusted in Preparation Examples 2 and 3) were respectively mixed and used as the positive electrode active materials (active material with an average diameter D50: 12 µm and active material with an average diameter D50: 5 µm were mixed at a volume ratio of 8:2). At this time, the positive electrode had the ratio (initial efficiency) of the initial discharge capacity to the initial charge capacity in the battery using lithium as a counter electrode of 91%.

### <Experimental Example 3>

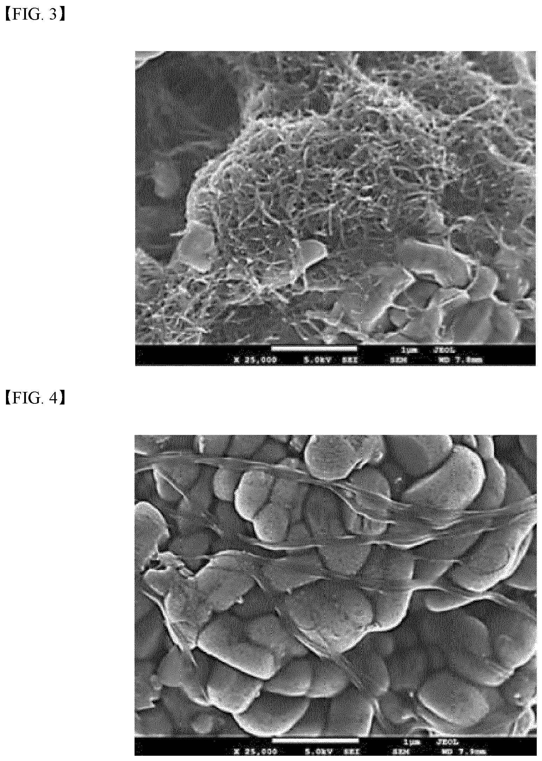

MWCNT and SWCNT prepared in Preparation Example 1 and Preparation Example 4 were respectively mixed with the positive electrode active material prepared in Preparation Example 2, and the results were taken by SEM and shown in Figs. 3 and 4.

Referring to Figs. 3 and 4, it can be confirmed that in the case of MWCNT, a plurality of layers of carbon nanotubes were formed in an entangled type, thus connecting between the positive electrode active materials, but not surrounding the surface, whereas in the case of SWCNT, bundle type single-walled carbon nanotubes surrounded the positive electrode active material in a small amount and were interconnected.

### <Experimental Example 4>

### Lifespan characteristics

Secondary batteries manufactured in Examples 1 to 10 and Comparative Examples 1 to 3 were subjected to CC/CV charging at 0.3C in the range of 4.2V~2.85V at room temperature, subjected to CC discharging at 0.5C, and 200 cycles were performed to evaluate lifespan characteristics. The results are shown in Table 1 below.

Specifically, the reduction rate of the discharge energy according to cycles was shown by setting the first discharge energy as 100%.

**[Table 1]**

| | Lifespan characteristics (200^{th}, %) |
|---|---|
| Example 1 | 94.7 |
| Example 2 | 95.1 |
| Example 3 | 94.3 |
| Example 4 | 93.1 |
| Example 5 | 91.5 |
| Example 6 | 94.1 |
| Example 7 | 94.9 |
| Example 8 | 95.2 |
| Example 9 | 94.1 |
| Example 10 | 93.9 |
| Comparative Example 1 | 89.1 |
| Comparative Example 2 | 91.2 |
| Comparative Example 3 | <70 |

| | |
|---|---|
| Examples 4 and 5 in the above table are comparative examples. | |

Referring to Table 1, it can be confirmed that Examples 1 to 9 according to the present disclosure exhibit more excellent lifespan characteristics than Comparative Example 1 using the sacrificial positive electrode material. It can be seen that even in the case of Comparative Example 4 where the doping amount of Zr is small, the lifespan characteristics are not significantly reduced, but the irreversible capacity compensation is not sufficient, and thus the lifespan characteristics are reduced by a certain amount as compared with Examples 1 to 3. In addition, it can be confirmed that in the case of Comparative Example 5 where the doping amount of Zr is too large, it acts as a resistance, rather reducing the lifespan characteristic.

Meanwhile, as compared to Example 1 using MWCNT, Examples 7 to 8 using SWCNTs with reduced impurity content exhibit more excellent lifespan properties, and even in comparison with Example 10 in which the content of the conductive material is increased, it exhibits even more excellent lifespan characteristics. However, it can be confirmed that Example 9 using SWCNTs with high impurity content has rather low lifespan characteristics due to the influence of impurities as compared with Example 1.

### <Experimental Example 5>

### High temperature storage characteristics

The secondary batteries manufactured in Examples 1 to 10 and Comparative Example 3 were subjected to CC/CV charging at 4.2V and 0.3C, the amount of gas was immediately analyzed in the SOC 100% state, and the cells filled at SOC 100% state were stored in a high-temperature chamber at 72 degrees. After 4 weeks, the generation amount of gas (µℓ) was analyzed through gas analysis, and the results are shown in Table 2 below.

The gas amount analysis was performed with a Binary Gas Analyzer (BGA-08) device, and proceeded according to the analysis method of AMT-5535-0k. The amount of gas in the result below is calculated based on 25 degrees and 1 atm.

**[Table 2]**

| | | H2 | CO | CO2 | CH4 | C2H2 | C2H4 | C2H6 | C3H6 | C3H8 | Total amount (µL) | Gas increasing amount |
|---|---|---|---|---|---|---|---|---|---|---|---|---|
| Example 1 | one charging | 8 | 88 | 17 | 1400 | <5 | 6 | 31 | <5 | <5 | 1550 | 340% |
| | after 4 weeks | <5 | 362 | 1180 | 3590 | <5 | 26 | 99 | <5 | 8 | 5265 | |
| Example 2 | one charging | <5 | 76 | 10 | 1345 | <5 | 4 | 32 | <5 | <5 | 1467 | 316% |
| | after 4 weeks | <5 | 320 | 935 | 3260 | <5 | 24 | 87 | <5 | 5 | 4631 | |
| Example 3 | one charging | 7 | 84 | 12 | 1463 | <5 | 8 | 35 | <5 | <5 | 1609 | 369% |
| | after 4 weeks | 4 | 452 | 1237 | 4102 | <5 | 26 | 110 | <5 | 9 | 5940 | |
| Example 4 | one charging | <5 | 50 | 4 | 1123 | <5 | 1 | 27 | <5 | <5 | 1205 | 325% |
| | after 4 weeks | <5 | 260 | 689 | 2860 | <5 | 15 | 79 | <5 | 8 | 3911 | |
| Example 5 | one charging | <5 | 87 | 19 | 1501 | <5 | 6 | 36 | <5 | <5 | 1649 | 377% |
| | after 4 weeks | 3 | 486 | 1320 | 4239 | <5 | 28 | 134 | <5 | 9 | 6219 | |
| Example 6 | one charging | <5 | 88 | <5 | 1450 | <5 | 6 | 30 | <5 | 6 | 1580 | 436% |
| | after 4 weeks | <5 | 380 | 2450 | 3874 | <5 | 26 | 152 | <5 | 11 | 6893 | |
| Example 7 | one charging | <5 | 83 | <5 | 1322 | <5 | <5 | 44 | <5 | <5 | 1449 | 449% |
| | after 4 weeks | <5 | 365 | 1984 | 3985 | <5 | 26 | 139 | <5 | 11 | 6510 | |
| Example 8 | one charging | <5 | 81 | <5 | 1456 | <5 | 3 | 35 | <5 | <5 | 1575 | 432% |
| | after 4 weeks | <5 | 320 | 2841 | 3456 | <5 | 22 | 156 | <5 | 5 | 6800 | |
| Example 9 | one charging | <5 | 86 | <5 | 1203 | <5 | 4 | 21 | <5 | <5 | 1314 | 502% |
| | after 4 weeks | <5 | 607 | 2340 | 3485 | <5 | 25 | 133 | <5 | 6 | 6596 | |
| Example 10 | one charging | <5 | 84 | <5 | 1463 | <5 | 6 | 35 | <5 | <5 | 1588 | 427% |
| | after 4 weeks | <5 | 430 | 2953 | 3222 | <5 | 29 | 128 | <5 | 12 | 6774 | |
| Comparative Example 1 | one charging | <5 | 26 | <5 | 1570 | <5 | <5 | 32 | <5 | <5 | 1628 | 599% |
| | after 4 weeks | <5 | 607 | 3860 | 5070 | <5 | 30 | 166 | <5 | 11 | 9744 | |
| Comparative Example 2 | one charging | <5 | 46 | <5 | 1265 | <5 | <5 | 26 | <5 | <5 | 1337 | 551% |
| | after 4 weeks | <5 | 423 | 2130 | 4652 | <5 | 28 | 123 | <5 | 10 | 7366 | |
| Comparative Example 3 | one charging | <5 | 15 | 4 | 1305 | <5 | <5 | 24 | <5 | <5 | 1348 | 490% |
| | after 4 weeks | <5 | 502 | 2421 | 3569 | 30 | 21 | 50 | <5 | 10 | 6603 | |

| | | | | | | | | | | | | |
|---|---|---|---|---|---|---|---|---|---|---|---|---|
| Examples 4 and 5 in the above table are comparative examples. | | | | | | | | | | | | |

Referring to Table 2, it can be confirmed that in the case of the secondary batteries of Examples 1 to 10, the sacrificial positive electrode material is not used, and thus, the gas generation is reduced after high temperature storage as compared to Comparative Example 1.

Meanwhile, it can be confirmed that as the content of impurities in the conductive material is smaller, the gas generation naturally decreases.

In addition, , it can be confirmed that when a positive electrode material not doped with Zr is used (Comparative Example 2), a large amount of gas is generated due to a side reaction on the surface of the positive electrode.

### [Industrial Applicability]

As described above, a secondary battery according to one embodiment of the present disclosure includes a low efficiency positive electrode active material of a level similar to that of the negative electrode, whereby a separate sacrificial positive electrode material is not required, and thus it can have capacity and lifespan characteristics of equivalent levels to the case of including the sacrificial positive electrode material, while significantly reducing the generation amount of gas during high-temperature storage.

In addition, according to another embodiment of the present disclosure, since the positive electrode of the present disclosure includes single-walled carbon nanotubes (SWCNTs) with a low content of impurities as a conductive material, thereby securing excellent conductivity even when the cycle proceeds, and improving the lifespan characteristics of a secondary battery including the same.

## Claims

1. A secondary battery comprising a positive electrode, a negative electrode, and a separator interposed between the positive electrode and the negative electrode,
wherein the positive electrode is configured to form a positive electrode mixture layer on at least one surface of the positive electrode current collector,
wherein the positive electrode mixture layer comprises a positive electrode active material,
wherein the positive electrode active material is doped with a dopant, and comprises a lithium transition metal oxide in which the molar ratio of Ni is 88% or more based on the total mole of transition metals excluding Li, and wherein the lithium transition metal oxide is doped with a dopant in an amount of 4000 to 5000 ppm based on the total weight of the lithium transition metal oxide and the dopant is Zr,
wherein the lithium transition metal oxide is represented by the following chemical formula 1:
Li₁₊ₓNiₐCo_{b}Mn_{c}M_{1-(a+b+c)}O_{2-y}A_{y} (1)
wherein,
M is at least one selected from the group consisting of Cu, Ti, Mg, Al, and Pt,
A is an oxygen-substitution type halogen, and
0≤x≤0.5, 0.88≤a<1, 0≤b≤0.2, 0≤c≤0.2, 0.9≤a+b+c≤1, and 0≤y≤0.001,
wherein the lithium transition metal oxide are single particles, which means a state in which primary particles exist individually or less than 10 primary particles are aggregated,
wherein the lithium transition metal oxide is used in a bimodal form with regard to an average diameter (D50), wherein particles having an average diameter (D50) of 10 to 20 µm and particles having an average diameter (D50) of 1 to 7 µm are mixed, wherein the D50 average diameter is measured by a laser diffraction method as disclosed in the specification,
wherein the negative electrode is configured to form a negative electrode mixture layer on at least one surface of the negative electrode current collector,
wherein the negative electrode mixture layer comprises a negative electrode active material,
wherein the negative electrode active material comprises a silicon-based active material, and
wherein the positive electrode has an initial efficiency ratio of an initial discharge capacity to an initial charge capacity in a battery using lithium as a counter electrode of 85% to 89%.

2. The secondary battery according to claim 1 wherein:
the lithium transition metal oxide is represented by the following chemical formula 2:
Li₁₊ₓNiₐCo_{b}Mn_{c}Al_{1-(a+b+c)}O_{2-y}A_{y} (2)
wherein,
A is an oxygen-substitution type halogen, and
0≤x≤0.5, 0.88≤a<1, 0≤b≤0.15, 0≤c≤0.15, 0.9≤a+b+c≤1, and 0≤y≤0.001.

3. The secondary battery according to claim 1 or 2 wherein:
the a is 0.90≤a<1.

4. The secondary battery according to claim 1 wherein:
the positive electrode has a ratio (initial efficiency) of an initial discharge capacity to an initial charge capacity in a battery using lithium as a counter electrode of 86% to 87%.

5. The secondary battery according to claim 1 wherein:
the negative electrode is a mixture of a silicon-based active material and a carbon-based active material.

6. The secondary battery according to claim 1 wherein:
the silicon-based active material is contained in an amount of 1 to 10% by weight based on the total weight of the negative electrode active material.

7. The secondary battery according to claim 1 wherein:
the negative electrode has a ratio (initial efficiency) of an initial discharge capacity to an initial charge capacity in a battery using lithium as a counter electrode of 85% to 89%.

8. The secondary battery according to claim 7 wherein:
the negative electrode has a ratio (initial efficiency) of an initial discharge capacity to an initial charge capacity in a battery using lithium as a counter electrode of 86% to 87%.

9. The secondary battery according to claim 1 wherein:
the positive electrode mixture layer further comprises a conductive material, and the conductive material is composed of a single-walled carbon nanotube (SWCNT) having an impurity content of 300 ppm to 5000 ppm.

10. The secondary battery according to claim 9 wherein:
the conductive material has an impurity content of 3000 ppm to 4000 ppm.

## Patentansprüche

1. Sekundärbatterie, umfassend eine positive Elektrode, eine negative Elektrode und einen Separator, der zwischen der positiven Elektrode und der negativen Elektrode angeordnet ist,
wobei die positive Elektrode konfiguriert ist, um eine positive Elektrodenmischungsschicht auf mindestens einer Oberfläche des Stromabnehmers der positiven Elektrode zu bilden,
wobei die positive Elektrodenmischungsschicht ein Positivelektrodenaktivmaterial umfasst,
wobei das Positivelektrodenaktivmaterial mit einem Dotierstoff dotiert ist und ein Lithiumübergangsmetalloxid umfasst, in dem das Molverhältnis von Ni 88 % oder mehr beträgt, bezogen auf das Gesamtmol von Übergangsmetallen außer Li, und wobei das Lithiumübergangsmetalloxid mit einem Dotierstoff in einer Menge von 4000 bis 5000 ppm dotiert ist, bezogen auf das Gesamtgewicht des Lithiumübergangsmetalloxids, und der Dotierstoff Zr ist,
wobei das Lithiumübergangsmetalloxid durch die folgende chemische Formel 1 dargestellt ist:
Li₁₊ₓNiₐCo_{b}Mn_{c}M_{1-(a+b+c)}O_{2-y}A_{y} (1)
wobei,
M mindestens eines ist, ausgewählt aus der Gruppe, bestehend aus Cu, Ti, Mg, Al und Pt,
A ein Halogen vom Sauerstoffsubstitutionstyp ist, und
0≤x≤0,5, 0,88≤a<1, 0≤b≤0,2, 0≤c≤0,2, 0,9≤a+b+c≤1 und 0≤y≤0,001 ist,
wobei das Lithiumübergangsmetalloxid einzelne Partikel sind, was einen Zustand bedeutet, in dem Primärpartikel einzeln existieren oder weniger als 10 Primärpartikel aggregiert sind,
wobei das Lithiumübergangsmetalloxid in einer bimodalen Form in Bezug auf einen mittleren Durchmesser (D50) verwendet wird, wobei Partikel mit einem mittleren Durchmesser (D50) von 10 bis 20 µm und Partikel mit einem mittleren Durchmesser (D50) von 1 bis 7 µm gemischt werden, wobei der mittlere Durchmesser D50 durch ein Laserbeugungsverfahren gemessen wird, wie in der Beschreibung offenbart,
wobei die negative Elektrode konfiguriert ist, um eine negative Elektrodenmischungsschicht auf mindestens einer Oberfläche des Stromabnehmers der negativen Elektrode zu bilden,
wobei die negative Elektrodenmischungsschicht ein Negativelektrodenaktivmaterial umfasst,
wobei das Negativelektrodenaktivmaterial ein Aktivmaterial auf Siliziumbasis umfasst und
wobei die positive Elektrode ein anfängliches Effizienzverhältnis einer anfänglichen Entladekapazität zu einer anfänglichen Ladekapazität in einer Batterie unter Verwendung von Lithium als Gegenelektrode von 85 % bis 89 % aufweist.

2. Sekundärbatterie nach Anspruch 1, wobei:
das Lithiumübergangsmetalloxid durch die folgende chemische Formel 2 dargestellt ist:
Li₁₊ₓNiₐCo_{b}Mn_{c}Al_{1-(a+b+c)}O_{2-y}A_{y} (2)
wobei,
A ein Halogen vom Sauerstoffsubstitutionstyp ist, und
0≤x≤0,5, 0,88≤a<1, 0≤b≤0,15, 0≤c≤0,15, 0,9≤a+b+c≤1 und 0≤y≤0,001 ist.

3. Sekundärbatterie nach Anspruch 1 oder 2, wobei:
das a 0,90≤a<1 ist.

4. Sekundärbatterie nach Anspruch 1, wobei:
die positive Elektrode ein Verhältnis (anfängliche Effizienz) einer anfänglichen Entladekapazität zu einer anfänglichen Ladekapazität in einer Batterie unter Verwendung von Lithium als Gegenelektrode von 86 % bis 87 % aufweist.

5. Sekundärbatterie nach Anspruch 1, wobei:
die negative Elektrode eine Mischung aus einem Aktivmaterial auf Siliziumbasis und einem Aktivmaterial auf Kohlenstoffbasis ist.

6. Sekundärbatterie nach Anspruch 1, wobei:
das Aktivmaterial auf Siliziumbasis in einer Menge von 1 bis 10 Gew.-% enthalten ist, bezogen auf das Gesamtgewicht des Negativelektrodenaktivmaterials.

7. Sekundärbatterie nach Anspruch 1, wobei:
die negative Elektrode ein Verhältnis (anfängliche Effizienz) einer anfänglichen Entladekapazität zu einer anfänglichen Ladekapazität in einer Batterie unter Verwendung von Lithium als Gegenelektrode von 85 % bis 89 % aufweist.

8. Sekundärbatterie nach Anspruch 7, wobei:
die negative Elektrode ein Verhältnis (anfängliche Effizienz) einer anfänglichen Entladekapazität zu einer anfänglichen Ladekapazität in einer Batterie unter Verwendung von Lithium als Gegenelektrode von 86 % bis 87 % aufweist.

9. Sekundärbatterie nach Anspruch 1, wobei:
die positive Elektrodenmischungsschicht ferner ein leitfähiges Material umfasst und das leitfähige Material aus einer einwandigen Kohlenstoffnanoröhre (SWCNT) mit einem Verunreinigungsgehalt von 300 ppm bis 5000 ppm zusammengesetzt ist.

10. Sekundärbatterie nach Anspruch 9, wobei:
das leitfähige Material einen Verunreinigungsgehalt von 3000 ppm bis 4000 ppm aufweist.

## Revendications

1. Batterie rechargeable comprenant une électrode positive, une électrode négative, et un séparateur interposé entre l'électrode positive et l'électrode négative,
dans laquelle l'électrode positive est configurée pour former une couche de mélange d'électrode positive sur au moins une surface du collecteur de courant d'électrode positive,
dans laquelle la couche de mélange d'électrode positive comprend un matériau actif d'électrode positive,
dans laquelle le matériau actif d'électrode positive est dopé avec un dopant, et comprend un oxyde de métal de transition lithium dans lequel le rapport molaire de Ni est égal ou supérieur à 88 % sur la base du nombre total de moles de métaux de transition excluant Li, et dans laquelle l'oxyde de métal de transition lithium est dopé avec un dopant dans une quantité de 4000 à 5000 ppm sur la base du poids total de l'oxyde de métal de transition lithium et le dopant est Zr,
dans laquelle l'oxyde de métal de transition lithium est représenté par la formule chimique 1 ci-après :
Li₁₊ₓNiₐCo_{b}Mn_{c}M_{1-(a+b+c)}O_{2-y}A_{y} (1)
dans laquelle,
M est un ou plusieurs éléments sélectionnés dans le groupe constitué de Cu, Ti, Mg, Al, et Pt,
A est un halogène de type à substitution d'oxygène, et
0≤x≤0,5, 0,88≤a<1, 0≤b≤0,2, 0≤c≤0,2, 0,9≤a+b+c≤1 et 0≤y≤0,001,
dans laquelle l'oxyde de métal de transition lithium est composé de particules simples, c'est-à-dire un état dans lequel des particules primaires existent individuellement ou moins de 10 particules primaires sont agrégées,
dans laquelle l'oxyde de métal de transition lithium est utilisé sous une forme bimodale pour un diamètre moyen (D50), dans laquelle des particules ayant un diamètre moyen (D50) de 10 à 20 µm et des particules ayant un diamètre moyen (D50) de 1 à 7 µm sont mélangées, dans laquelle le diamètre moyen D50 est mesuré par un procédé de diffraction laser, décrit dans la spécification,
dans laquelle l'électrode négative est configurée pour former une couche de mélange d'électrode négative sur au moins une surface du collecteur de courant d'électrode négative,
dans laquelle la couche de mélange d'électrode négative comprend un matériau actif d'électrode négative,
dans laquelle le matériau actif d'électrode négative comprend un matériau actif à base de silicium, et
dans laquelle l'électrode positive a un rapport d'efficacité initiale d'une capacité de décharge initiale à une capacité de charge initiale dans une batterie utilisant du lithium en tant que contre-électrode de 85 % à 89 %.

2. Batterie rechargeable selon la revendication 1, dans laquelle :
l'oxyde de métal de transition lithium est représenté par la formule chimique 2 ci-après :
Li₁₊ₓNiₐCo_{b}Mn_{c}Al_{1-(a+b+c)}O_{2-y}A_{y} (2)
dans laquelle,
A est un halogène de type à substitution d'oxygène, et
0≤x≤0,5, 0,88≤a<1, 0≤b≤0,15, 0≤c≤0,15, 0,9≤a+b+c≤1 et 0≤y≤0,001.

3. Batterie rechargeable selon la revendication 1 ou 2 dans laquelle :
a est 0,90≤a<1.

4. Batterie rechargeable selon la revendication 1, dans laquelle :
l'électrode positive a un rapport (efficacité initiale) d'une capacité de décharge initiale à une capacité de charge initiale dans une batterie utilisant du lithium en tant que contre-électrode de 86 % à 87 %.

5. Batterie rechargeable selon la revendication 1, dans laquelle :
l'électrode négative est un mélange d'un matériau actif à base de silicium et d'un matériau actif à base de carbone.

6. Batterie rechargeable selon la revendication 1, dans laquelle :
le matériau actif à base de silicium est contenu dans une quantité de 1 à 10 % en poids sur la base du poids total du matériau actif d'électrode négative.

7. Batterie rechargeable selon la revendication 1, dans laquelle :
l'électrode négative a un rapport (efficacité (initiale) d'une capacité de décharge initiale à une capacité de charge initiale dans une batterie utilisant du lithium en tant que contre-électrode de 85 % à 89 %.

8. Batterie rechargeable selon la revendication 7, dans laquelle :
l'électrode négative a un rapport (efficacité initiale) d'une capacité de décharge initiale à une capacité de charge initiale dans une batterie utilisant du lithium en tant que contre-électrode de 86 % à 87 %.

9. Batterie rechargeable selon la revendication 1, dans laquelle :
la couche de mélange d'électrode positive comprend en outre un matériau conducteur, et le matériau conducteur est composé d'un nanotube de carbone à paroi simple (SWCNT) ayant une teneur en impuretés de 300 ppm à 5000 ppm.

10. Batterie rechargeable selon la revendication 9, dans laquelle :
le matériau conducteur a une teneur en impuretés de 3000 ppm à 4000 ppm.
